# EUROPEAN PATENT APPLICATION

(11) **EP 4 641 813 A1**
(43) Date of publication of application: **29.10.2025**
(21) Application number: 24760053.9
(22) Date of filing: 30.01.2024
(51) Int. Cl.: H01M 50/533, H01G 11/76, H01M 50/538

(54) **POWER STORAGE ELEMENT**

(30) Priority: 24.02.2023 JP 2023026926
(71) Applicant: GS Yuasa International Ltd., Kisshoin, Minami-ku, Kyoto-shi, Kyoto 601-8520 (JP)
(72) Inventor: OGAWA, Masumi, Kyoto-shi, Kyoto 601-8520 (JP)
(74) Representative: Isarpatent
(86) International application number: PCT/JP2024/002728
(87) International publication number: WO 2024/176746

(57) **Abstract**

An energy storage device includes: a first electrode assembly and a second electrode assembly; and a first current collector. The first electrode assembly includes a first body part and a first tab part extending from an end of the first body part in a first direction. The second electrode assembly includes a second body part and a second tab part extending from an end of the second body part in the first direction. The first tab part and the second tab part are superimposed in the first direction and are joined to the first current collector at a first junction part. The first tab part is located between the second tab part and the first current collector at the first junction part. A length of the first tab part is shorter than a length of the second tab part.

## Description

### TECHNICAL FIELD

The present invention relates to an energy storage device.

### BACKGROUND ART

Patent Document 1 discloses a lithium ion secondary battery that includes a case and an element housed within the case. The element includes a positive electrode, a negative electrode, and a separator that are wound together. A part of a positive electrode core material or a negative electrode core material of the element is an uncoated part where an active material is not retained, and furthermore, a part of the uncoated part is drawn out from the element and serves as a current collector lead. The end of the current collector lead is sandwiched between a waste material and a sealing plate and is laser welded.

### PRIOR ART DOCUMENT

### PATENT DOCUMENT

Patent Document 1: JP-A-2003-22796

### SUMMARY OF THE INVENTION

### PROBLEMS TO BE SOLVED BY THE INVENTION

In the above conventional lithium ion secondary battery, there is only one element housed within the case. Therefore, it is considered to house a plurality of elements within the case for the purpose of increasing the storage capacity and the like. However, if the plurality of elements is housed within the case, the positions of the current collector leads of respective elements differ in the arrangement direction of the plurality of elements. Therefore, if the plurality of current collector leads is bundled and welded to the sealing plate, the uncoated part of at least one current collector lead is likely to become a surplus part that protrudes from the welded part. This surplus part can be a factor in the occurrence of troubles.

The present invention has been made by the inventor of the present application newly focusing on the above-mentioned problem, and an object of the present invention is to provide an energy storage device that includes a plurality of electrode assemblies and has improved reliability.

### MEANS FOR SOLVING THE PROBLEMS

An energy storage device according to one aspect of the present invention includes a first electrode assembly and a second electrode assembly, and a first current collector. The first electrode assembly includes a first body part and a first tab part extending from an end of the first body part in a first direction, the second electrode assembly includes a second body part and a second tab part extending from an end of the second body part in the first direction, the first tab part and the second tab part are superimposed in the first direction and are joined to the first current collector at a first junction part, the first tab part is located between the second tab part and the first current collector at the first junction part, and a length of the first tab part is shorter than a length of the second tab part.

### ADVANTAGES OF THE INVENTION

The present invention can provide an energy storage device that includes a plurality of electrode assemblies and has improved reliability.

### BRIEF DESCRIPTION OF THE DRAWINGS

Fig. 1 is a perspective view showing appearance of an energy storage device according to the embodiment.
Fig. 2 is an exploded perspective view of the energy storage device according to the embodiment.
Fig. 3 is a perspective view showing the configuration of an electrode assembly group according to the embodiment.
Fig. 4 is a side view schematically showing the difference in length between a first tab part and a second tab part according to the embodiment.
Fig. 5 is a side view for describing the joining process between the first tab part, the second tab part, and a first current collector according to the embodiment.
Fig. 6 is a first cross-sectional view schematically showing a partial section of the energy storage device according to the embodiment.
Fig. 7 is a side view for describing the joining process between a fifth tab part, a sixth tab part, and a second current collector according to the embodiment.
Fig. 8 is a second cross-sectional view schematically showing a partial section of the energy storage device according to the embodiment.
Fig. 9 is a cross-sectional view schematically showing a partial section of the energy storage device according to a modification example 1 of the embodiment.
Fig. 10 is a plan view schematically showing the configuration of an energy storage apparatus that includes the energy storage devices according to the embodiment.

### MODE FOR CARRYING OUT THE INVENTION

(1) An energy storage device according to one aspect of the present invention includes a first electrode assembly and a second electrode assembly, and a first current collector. The first electrode assembly includes a first body part and a first tab part extending from an end of the first body part in a first direction, the second electrode assembly includes a second body part and a second tab part extending from an end of the second body part in the first direction, the first tab part and the second tab part are superimposed in the first direction and are joined to the first current collector at a first junction part, the first tab part is located between the second tab part and the first current collector at the first junction part, and a length of the first tab part is shorter than a length of the second tab part.

With this configuration, the length of the first tab part is shorter than the length of the second tab part, and at the first junction part, the first tab part is disposed between the first current collector and the second tab part. When the first tab part and the second tab part are superimposed and joined to the first current collector, it is easier to align the distal end position of the first tab part with the distal end position of the second tab part for joining. As a result, the surplus part at the distal end of the first tab part, the surplus part protruding beyond the first junction part, is unlikely to be long. Therefore, the occurrence of troubles due to the surplus part is suppressed.

(2) In the energy storage device according to claim (1) described above, the first tab part and the second tab part may be located, in the first direction, between the first body part, the second body part and the first current collector, and may be joined to the first current collector in a posture bent toward one side in a second direction orthogonal to the first direction.

With this configuration, the first tab part and the second tab part are in a bent state, allowing the first body part and the second body part to be brought closer to the first current collector. Thus, the spatial volume between the first current collector, the first body part and the second body part can be reduced. This contributes to the improvement of the energy density of the energy storage device.

(3) The energy storage device according to (1) or (2) described above may further include a third electrode assembly and a fourth electrode assembly, in which the third electrode assembly may include a third body part and a third tab part extending from an end of the third body part in the first direction, the fourth electrode assembly may include a fourth body part and a fourth tab part extending from an end of the fourth body part in the first direction, the third tab part and the fourth tab part may be superimposed in the first direction and joined to the first current collector at a second junction part, in the second junction part, the third tab part may be located between the fourth tab part and the first current collector, a length of the third tab part may be shorter than a length of the fourth tab part, and the first junction part and the second junction part may face each other in the second direction orthogonal to the first direction.

With this configuration, in the energy storage device including four electrode assemblies, the surplus part of the tab part protruding from the first junction part is unlikely to be long, and the surplus part protruding from the second junction part is also unlikely to be long. Therefore, in the first current collector, even if the first junction part and the second junction part are disposed to face each other in the second direction, the surplus parts protruding from these junction parts are unlikely to come into contact with each other. This allows the joining work for the formation of the first junction part and/or the formation of the second junction part to be precisely executed.

(4) The energy storage device according to any one of (1) to (3) described above may further include a second current collector, in which the first electrode assembly may further include a fifth tab part having a polarity different from a polarity of the first tab part, the fifth tab part extending from an end of the first body part in the first direction, the second electrode assembly may further include a sixth tab part having a polarity different from a polarity of the second tab part, the sixth tab part extending from an end of the second body part in the first direction, the fifth tab part and the sixth tab part may be superimposed in the first direction and joined to the second current collector at the third junction part, the fifth tab part may be located between the sixth tab part and the second current collector in the first direction, and a length of the fifth tab part may be shorter than a length of the sixth tab part.

With this configuration, the surplus part at the distal end of the fifth tab part, the surplus part protruding beyond the third junction part of the second current collector, is unlikely to be long. Thus, the occurrence of troubles caused by the surplus part of the fifth tab part is suppressed. The first current collector and the second current collector are both disposed in the first direction of the first body part and the second body part. Therefore, the joining work for joining the first current collector and the second current collector, and the first electrode assembly and the second electrode assembly can be efficiently performed.

(5) In the energy storage device according to any one of (1) to (4) described above, the first tab part may extend in the first direction from only a part of the first body part in an electrode plate stacking direction, and the second tab part may extend in the first direction from only a part of the second body part in an electrode plate stacking direction.

With this configuration, the thickness of each of the first tab part and the second tab part is formed relatively thin. As a result, when superimposing the first tab part and the second tab part in the first direction to join to the first current collector, the first tab part and the second tab part can be joined precisely and/or easily. This contributes to the improvement of the reliability of the first junction part.

A description of an energy storage device according to an embodiment of the present invention will be given below with reference to the drawings. Note that the embodiment whose description will be given below provides either comprehensive or specific examples. Numerical values, shapes, materials, components, arrangement positions and connection forms of the components, manufacturing processes, and the order of the manufacturing processes shown in the following embodiment are one example and do not intend to limit the present invention. In each figure, the size and the like are not illustrated strictly. Furthermore, in each figure, identical or similar components are denoted with the same reference signs.

In the following description and drawings, the alignment direction of one pair of terminals of the energy storage device (positive electrode and negative electrode, hereinafter the same), the alignment direction of one pair of current collectors, or the opposing direction of one pair of short side surfaces of a case is defined as the X-axis direction. The opposing direction of one pair of long side surfaces of the case, the stacking direction of electrode plates of the electrode assembly, or the thickness direction of the case is defined as the Y-axis direction. The alignment direction of a case body and a lid body of the energy storage device, or the longitudinal direction of the short side surface of the case is defined as the Z-axis direction. The X-axis direction, the Y-axis direction, and the Z-axis direction are directions that intersect with each other (orthogonal in the present embodiment). Depending on the usage aspect, it is possible that the Z-axis direction does not correspond to the vertical direction; however, for the convenience of description below, the Z-axis direction will be described as the vertical direction.

In the following description, for example, the X-axis plus direction indicates the direction of an arrow along the X-axis, while the X-axis minus direction indicates the direction opposite to the X-axis plus direction. The same applies to the Y-axis direction and the Z-axis direction. The term "X-axis direction" simply refers to both directions parallel to the X-axis or either one of the directions. The same applies to the terms related to the Y-axis and the Z-axis.

Furthermore, expressions indicating relative directions or postures, such as parallel and orthogonal, strictly include cases that do not represent those directions or postures. For example, when it is stated that two directions are orthogonal, this means not only that the two directions are completely orthogonal, but also that the two directions are substantially orthogonal, that is, for example, this also means to include a difference of approximately a few percent. In the following description, when the term "insulation" is used, this means "electrical insulation".

### (Embodiment)

### [1. Overall Description of Energy Storage Device]

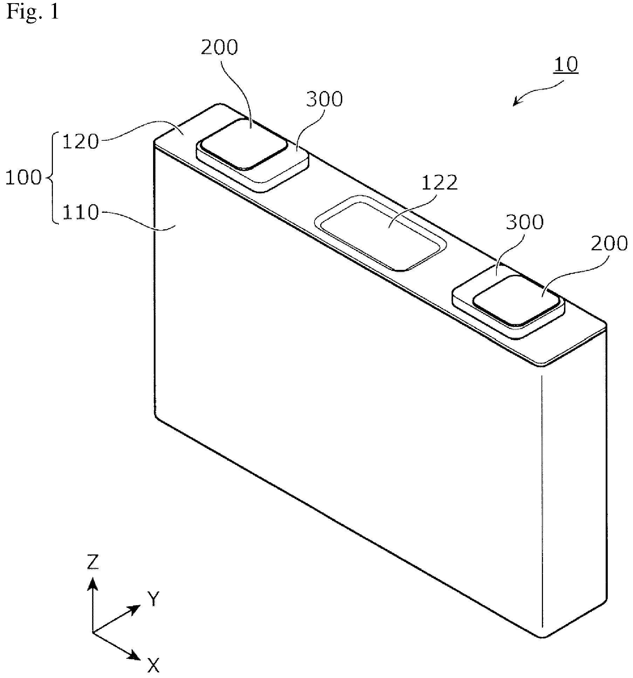

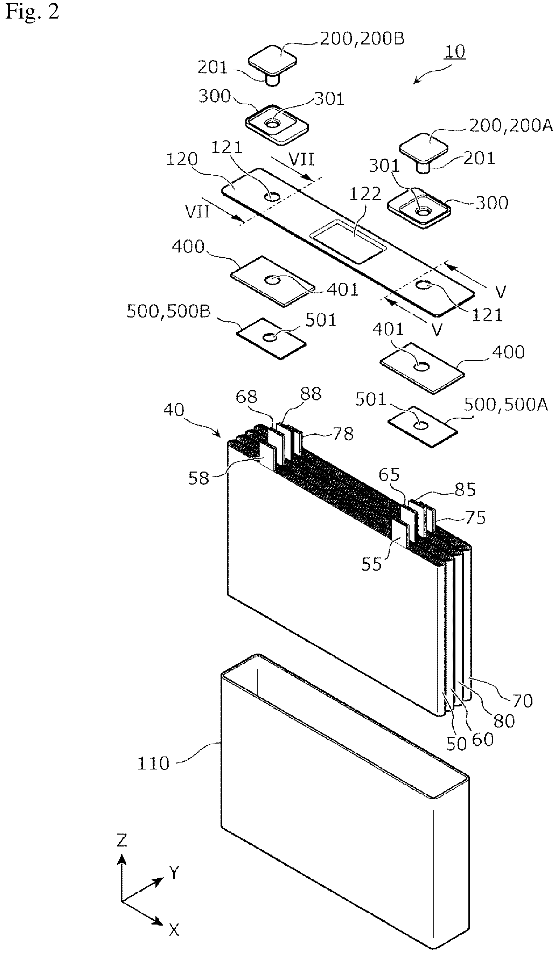

First, with reference to Figs. 1 and 2, an overall description of an energy storage device 10 in the present embodiment is provided. Fig. 1 is a perspective view showing appearance of the energy storage device 10 according to the embodiment. Fig. 2 is an exploded perspective view of the energy storage device 10 according to the embodiment.

The energy storage device 10 is a secondary battery, and more specifically is a nonaqueous electrolyte secondary battery such as a lithium ion secondary battery. The energy storage device 10 is used, for example, as a battery or the like for driving or engine starting of mobile bodies such as automobiles, motorcycles, watercraft, ships, snowmobiles, agricultural machinery, construction machinery, automatic guided vehicles (AGVs), railway vehicles for electric railways, or the like. As the above-mentioned automobiles, an electric vehicle (EV), hybrid electric vehicle (HEV), plug-in hybrid electric vehicle (PHEV), and fossil fuel (gasoline, light oil, liquefied natural gas, and the like) vehicle are illustrated. As the above-mentioned railway vehicles for electric railways, an electric train, monorail, linear motor car, and hybrid train that includes both a diesel engine and an electric motor are illustrated. The energy storage device 10 can also be used as a stationary battery or the like for home use, business use, or the like.

The energy storage device 10 is not limited to the nonaqueous electrolyte secondary battery, and may also be a secondary battery other than the nonaqueous electrolyte secondary battery, or a capacitor. The energy storage device 10 may be a primary battery.

As shown in Fig. 1, the energy storage device 10 includes a case 100, one pair of (positive electrode and negative electrode) terminals 200, and one pair of external insulating members 300. In the following, when distinguishing between the positive electrode terminal 200 and the negative electrode terminal 200, the positive electrode terminal 200 is described as a first terminal 200A, and the negative electrode terminal 200 is described as a second terminal 200B. As shown in Fig. 2, an electrode assembly group 40, one pair of (positive electrode and negative electrode) current collectors 500, and one pair of internal insulating members 400 are housed inside the case 100. In the following, when distinguishing between the positive electrode current collector 500 and the negative electrode current collector 500, the positive electrode current collector 500 is described as a first current collector 500A, and the negative electrode current collector 500 is described as a second current collector 500B. An electrolyte solution (nonaqueous electrolyte) is sealed inside the case 100, but the illustration is omitted. The electrolyte solution is not particularly limited in type as long as the performance of the energy storage device 10 is not impaired, and various types can be selected. Furthermore, a spacer, an insulating film, and the like, which are not illustrated, may be disposed inside the case 100.

The case 100 is a rectangular parallelepiped-shaped (box-shaped) case. The case 100 includes a case body 110 and a lid body 120 that closes an opening of the case body 110. After the electrode assembly group 40 is housed inside the case body 110, the case body 110 and the lid body 120 are welded together, or the like, thereby sealing the interior of the case 100. The material of the case body 110 and the lid body 120 is not particularly limited, and is preferable to be weldable metal such as stainless steel, aluminum, aluminum alloy, iron, or plated steel sheet, for example.

The case body 110 is a rectangular cylindrical member including a bottom, and an opening is formed at the top. The lid body 120 is a rectangular plate-shaped member that closes the opening of the case body 110. A gas release valve 122 that releases gas inside the case 100 when internal pressure of the case 100 excessively rises is disposed on the lid body 120. The lid body 120 may further be provided with an electrolyte solution filling port or the like for injecting an electrolyte solution into the case 100.

The electrode assembly group 40 includes a plurality of electrode assemblies. Here, the plurality of electrode assemblies is in a state in which separation into individual electrode assemblies is possible. In the present embodiment, the electrode assembly group 40 includes four electrode assemblies. The four electrode assemblies are a first electrode assembly 50, a second electrode assembly 60, a third electrode assembly 70, and a fourth electrode assembly 80. Each of the four electrode assemblies includes a body part and one pair of (positive electrode and negative electrode) tab parts extending from an end of the body part in the Z-axis plus direction. The Z-axis plus direction is one example of the first direction.

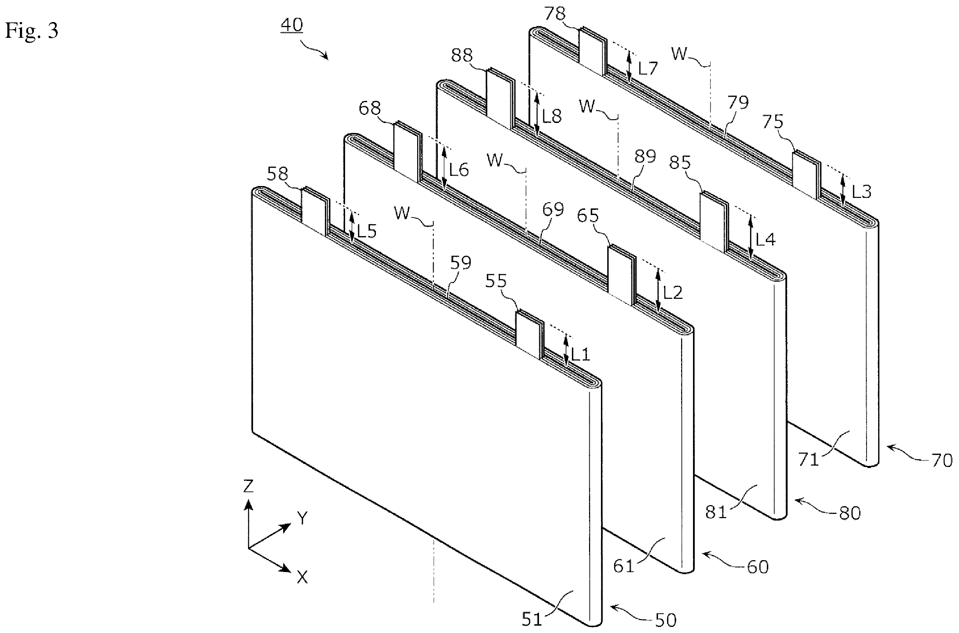

In the present embodiment, since the four electrode assemblies (50, 60, 70, and 80) are arranged in the Y-axis direction, the electrode assembly group 40 includes four positive electrode tab parts arranged in the Y-axis direction, and four negative electrode tab parts arranged in the Y-axis direction. The four positive electrode tab parts are a first tab part 55, a second tab part 65, a third tab part 75, and a fourth tab part 85. The four negative electrode tab parts are a fifth tab part 58, a sixth tab part 68, a seventh tab part 78, and an eighth tab part 88. The four positive electrode tab parts are joined to the first current collector 500A in a state of being bent in the Y-axis direction (see Fig. 2). The four negative electrode tab parts are joined to the second current collector 500B in a state of being bent in the Y-axis direction (see Fig. 2). The Y-axis direction is one example of the second direction. Details of the four electrode assemblies included in the electrode assembly group 40, and the tab parts included in each electrode assembly will be described later with reference to Figs. 3 to 8.

The terminal 200 is a terminal electrically connected to the plurality of electrode assemblies included in the electrode assembly group 40 via the current collector 500. The terminal 200 is attached to the lid body 120 disposed above the electrode assembly group 40. Specifically, the terminal 200 includes a shaft part 201 that penetrates the lid body 120. The shaft part 201 of the terminal 200 is inserted and crimped into a through hole 301 of the external insulating member 300, a through hole 121 of the lid body 120, a through hole 401 of the internal insulating member 400, and a through hole 501 of the current collector 500. As a result, the terminal 200 is fixed to the lid body 120 together with the external insulating member 300, the internal insulating member 400, and the current collector 500. The first terminal 200A, which is the positive electrode terminal 200, is formed using aluminum, an aluminum alloy, or the like. The second terminal 200B, which is the negative electrode terminal 200, is formed using copper, copper alloy, or the like.

The current collector 500 is a member that is joined to the plurality of tab parts. As methods for the joining, ultrasonic bonding, laser welding, resistance welding, caulking bonding, or the like is employed. The material of the current collector 500 is not limited, and for example, the first current collector 500A, which is the positive electrode current collector 500, is formed using a metal member such as aluminum, or aluminum alloy. The second current collector 500B, which is the negative electrode current collector 500, is formed using a metal member such as copper or copper alloy.

The external insulating member 300 is a member that insulates the lid body 120 from the terminal 200. In the present embodiment, the external insulating member 300 also functions as a gasket that seals a space between the lid body 120 and the shaft part 201 of the terminal 200. The internal insulating member 400 is a member that insulates the lid body 120 from the current collector 500. The external insulating member 300 and the internal insulating member 400 are each formed using a resin material that has electrical insulation properties.

In the energy storage device 10 configured in this manner, the plurality of positive electrode tab parts (first tab part 55, second tab part 65, third tab part 75, and fourth tab part 85) is a layered product of metal foil, and the positions of these tab parts in the Y-axis direction are different from each other. Furthermore, the tab parts are joined to the first current collector 500A in a posture bent in the Y-axis direction. This also applies to a junction part between the second current collector 500B and the plurality of negative electrode tab parts (fifth tab part 58, sixth tab part 68, seventh tab part 78, and eighth tab part 88).

### [2. Regarding the Configuration of the plurality of Tab Parts and Surroundings]

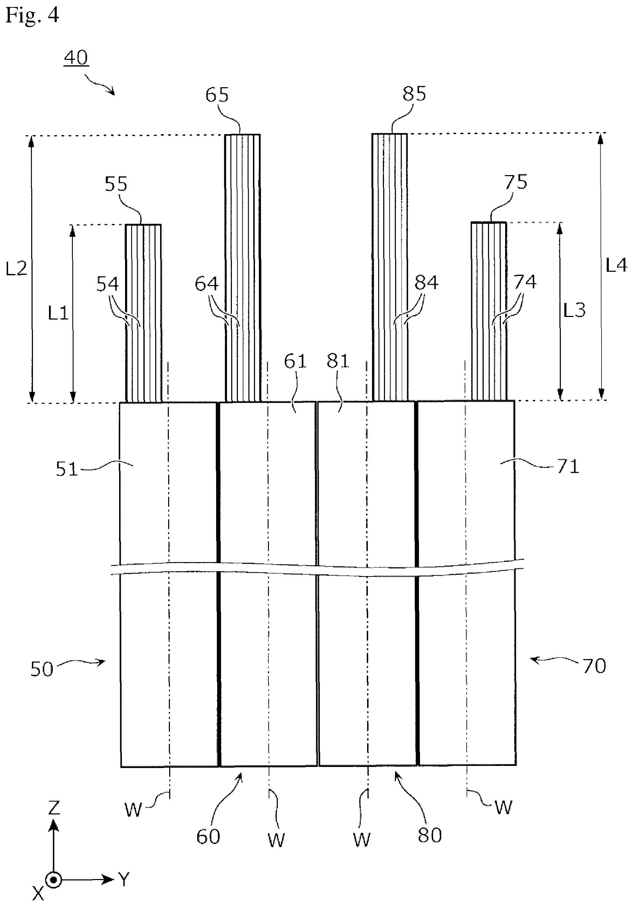

Fig. 3 is a perspective view showing the configuration of the electrode assembly group 40 according to the embodiment. Fig. 3 illustrates the four electrode assemblies (50, 60, 70, and 80) included in the electrode assembly group 40, separated in the Y-axis direction. Fig. 4 is a side view schematically showing the difference in length between the first tab part 55 and the second tab part 65. Fig. 4 also shows the difference in length between the third tab part 75 and the fourth tab part 85.

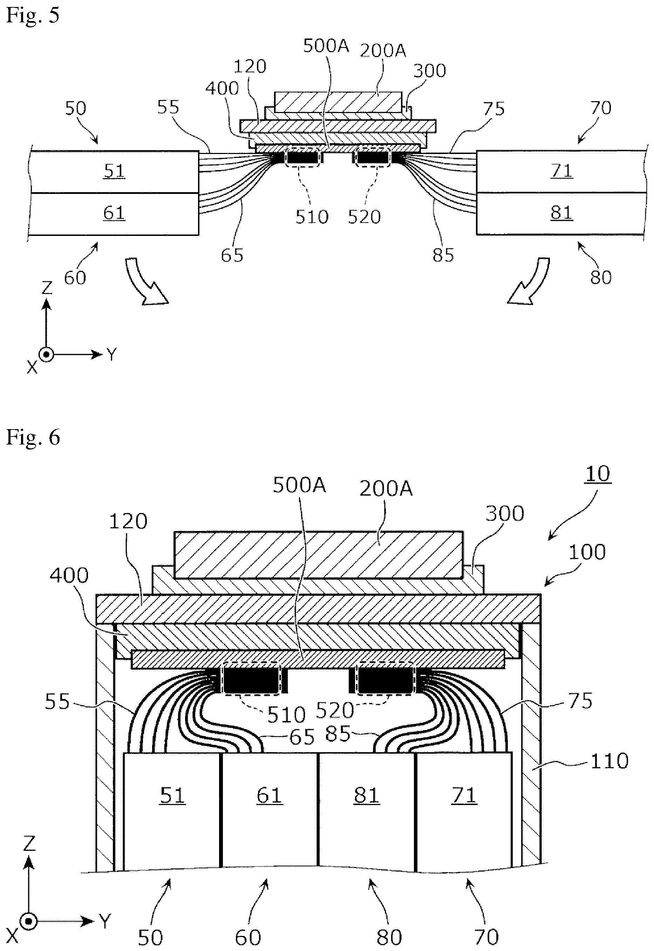

Fig. 5 is a side view for describing the joining process between the first tab part 55, the second tab part 65, and the first current collector 500A. Fig. 6 is a first cross-sectional view schematically showing a partial section of the energy storage device 10 according to the embodiment. Figs. 5 and 6 illustrate sections of the lid body 120, the first terminal 200A, the external insulating member 300, the internal insulating member 400, and the first current collector 500A. These sections are sections in the YZ plane along the line V-V in Fig. 2. Figs. 5 and 6 schematically illustrate a part of side surfaces of the four electrode assemblies (50, 60, 70, and 80) as viewed from the X-axis plus direction.

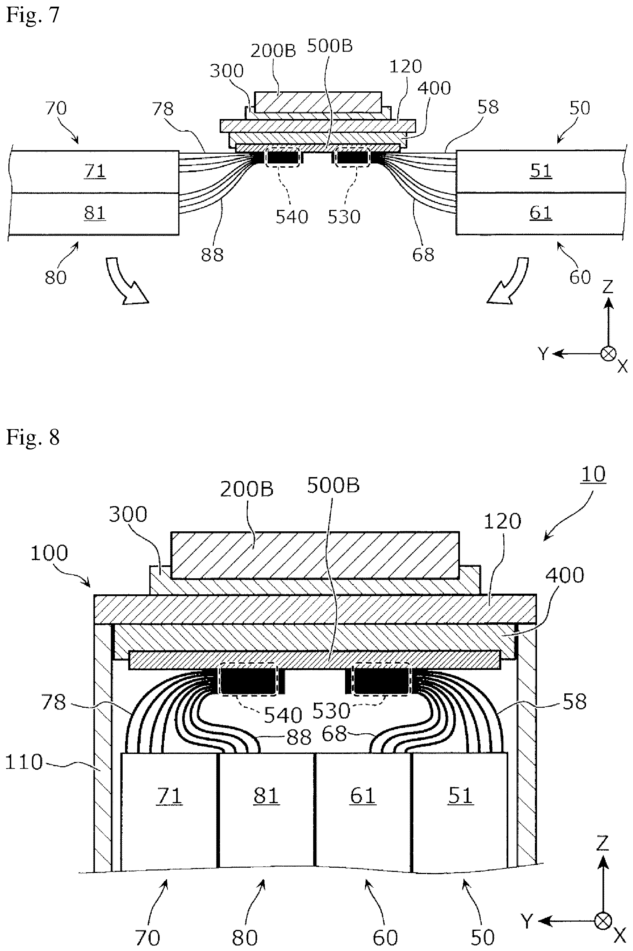

Fig. 7 is a side view for describing the joining process between the fifth tab part 58, the sixth tab part 68, and the second current collector 500B. Fig. 8 is a second cross-sectional view schematically showing a partial section of the energy storage device 10 according to the embodiment. Figs. 7 and 8 illustrate sections of the lid body 120, the second terminal 200B, the external insulating member 300, the internal insulating member 400, and the second current collector 500B. These sections are sections in the YZ plane along the line VII-VII in Fig. 2. Figs. 7 and 8 schematically illustrate a part of side surfaces of the four electrode assemblies (50, 60, 70, and 80) as viewed from the X-axis minus direction.

In the energy storage device 10 of the present embodiment, as shown in Figs. 3 and 4, the four electrode assemblies (50, 60, 70, and 80) are arranged in the order of the first electrode assembly 50, the second electrode assembly 60, the fourth electrode assembly 80, and the third electrode assembly 70, facing the Y-axis plus direction. In the present embodiment, since the basic structure of the four electrode assemblies is common, a description of the basic structure of the first electrode assembly 50 will be given as a representative.

The first electrode assembly 50 is an energy storage element (power generating element) including a positive electrode plate, a negative electrode plate, and a separator, and capable of storing electricity. The first electrode assembly 50 includes a first body part 51, and the first tab part 55 and the fifth tab part 58 extending from an end of the first body part 51 in the Z-axis plus direction.

More specifically, the first electrode assembly 50 is formed by winding the positive electrode plate, the negative electrode plate, and the separator. In Figs. 3 and 4, the two-dot chain line marked with the symbol W represents a winding axis W of the first electrode assembly 50. The winding axis W is a virtual axis that serves as the central axis when winding the positive electrode plate and the like. The first electrode assembly 50 is formed in a flat shape in a direction orthogonal to the winding axis W. That is, the first electrode assembly 50 is a wound-type, flat-shaped electrode assembly. In the present embodiment, the first electrode assembly 50 has a flat shape in the Y-axis direction, as shown in Fig. 3. More specifically, the first electrode assembly 50 includes curved parts at both ends in the X-axis direction and an intermediate part between the curved parts. In the intermediate part, the flat portion (portion substantially parallel to the XZ plane) of the electrode plates (positive electrode plate and negative electrode plate) are stacked in the Y-axis direction. That is, in the present embodiment, the main stacking direction of the electrode plates of the first electrode assembly 50 is in the Y-axis direction. In the following, when referring to the "stacking direction of the electrode plates of the first electrode assembly 50", the stacking direction means the Y-axis direction. This also applies to the second electrode assembly 60, the third electrode assembly 70, and the fourth electrode assembly 80.

The positive electrode plate includes a metal foil (positive electrode metal foil) and an active material layer formed on the metal foil. The negative electrode plate includes a metal foil (negative electrode metal foil) and an active material layer formed on the metal foil. In the first electrode assembly 50, the active material layer of the positive electrode plate and the active material layer of the negative electrode plate are stacked via the separator, thereby forming the first body part 51. The tab of the positive electrode metal foil is stacked in the Y-axis direction, thereby forming the first tab part 55. The tab of the negative electrode metal foil is stacked in the Y-axis direction, thereby forming the fifth tab part 58.

Each of the second electrode assembly 60, the third electrode assembly 70, and the fourth electrode assembly 80 includes a body part and one pair of (positive electrode and negative electrode) tab parts, in the same way as the first electrode assembly 50. Specifically, the second electrode assembly 60 includes a second body part 61, and the second tab part 65 and the sixth tab part 68 extending from an end of the second body part 61 in the Z-axis plus direction. The third electrode assembly 70 includes a third body part 71, and the third tab part 75 and the seventh tab part 78 extending from an end of the third body part 71 in the Z-axis plus direction. The fourth electrode assembly 80 includes a fourth body part 81, and the fourth tab part 85 and the eighth tab part 88 extending from an end of the fourth body part 81 in the Z-axis plus direction. Each of these tab parts is formed by stacking metal foil tabs. For example, as shown in Fig. 4, the first tab part 55 is formed by stacking the plurality of first tabs 54, and the second tab part 65 is formed by stacking the plurality of second tabs 64. The third tab part 75 is formed by stacking the plurality of third tabs 74, and the fourth tab part 85 is formed by stacking the plurality of fourth tabs 84.

Two tab parts adjacent in the Y-axis direction among the eight tab parts are bundled and joined to the current collector 500. As shown in Figs. 4 to 6, the first tab part 55 and the second tab part 65 are superimposed in the Z-axis direction and are joined to the first current collector 500A. For example, a first junction part 510 that joins the first tab part 55 and the second tab part 65 to the first current collector 500A is formed by ultrasonic bonding. During the joining, the first tab part 55 is disposed between the second tab part 65 and the first current collector 500A in the Z-axis direction.

More specifically, during the joining, the first electrode assembly 50 and the second electrode assembly 60 are in a posture where the winding axis W (see Fig. 3) is substantially parallel to the Y-axis, as shown in Fig. 5. Furthermore, in the Z-axis direction, the second electrode assembly 60 is disposed at a position farther from the first current collector 500A than the first electrode assembly 50. When joining the first tab part 55 and the second tab part 65 to the first current collector 500A, as shown in Fig. 5, the distance between the second body part 61 and the first junction part 510 is longer than the distance between the first body part 51 and the first junction part 510.

Therefore, if the length L2 of the second tab part 65 is made approximately the same as the length L1 of the first tab part 55 shown in Fig. 4, there is a possibility that the second tab part 65 will not reach the first junction part 510, or that the length of the second tab part 65 included in the first junction part 510 will not be sufficient. Meanwhile, if the length L1 of the first tab part 55 is made approximately the same as the length L2 of the second tab part 65 shown in Fig. 4, the first junction part 510 includes both the first tab part 55 and the second tab part 65. In this case, the distal end of the first tab part 55 will protrude in the Y-axis plus direction beyond the first junction part 510. That is, the surplus part of the distal end of the first tab part 55 (a part that protrudes in the Y-axis plus direction beyond the first junction part 510) is likely to be long. The end of the surplus part is not fixed. Therefore, there is a possibility that the surplus part may come into contact with other members such as the negative electrode plate included in the first body part 51 or the second body part 61. The contact of the surplus part with other members can be a factor in the occurrence of troubles of the energy storage device 10.

Therefore, in the present embodiment, the length L1 of the first tab part 55 is set shorter than the length L2 of the second tab part 65. This suppresses the length of the surplus part of the first tab part 55.

In this way, in the energy storage device 10 of the present embodiment, the first tab part 55 and the second tab part 65 are joined to the first current collector 500A at the first junction part 510. At the first junction part 510, the first tab part 55 is located between the second tab part 65 and the first current collector 500A. The length L1 of the first tab part 55 is shorter than the length L2 of the second tab part 65. In the present embodiment, the length L1 of the first tab part 55 is the length extending from the first body part 51, and the length L2 of the second tab part 65 is the length extending from the second body part 61. That is, as shown in Fig. 4, when the first tab part 55 and the second tab part 65 have a posture parallel to the Z-axis direction, the length L1 of the first tab part 55 in the Z-axis direction is shorter than the length L2 of the second tab part 65 in the Z-axis direction.

With this configuration, the length of the surplus part at the distal end of the first tab part 55, the surplus part protruding beyond the first junction part 510, is suppressed. That is, there is no surplus part protruding from the first junction part 510, or the length of the surplus part protruding from the first junction part 510 is relatively short. Therefore, the occurrence of troubles due to the surplus part is suppressed. In this way, the energy storage device 10 according to the present aspect is the energy storage device 10 that includes the plurality of electrode assemblies and has improved reliability.

In the present embodiment, the length is adjusted in unit of the tab part provided in each of the first electrode assembly 50 and the second electrode assembly 60. That is, the lengths of the plurality of first tabs 54 included in the first tab part 55 of the first electrode assembly 50 may be the same, and the lengths of the plurality of second tabs 64 included in the second tab part 65 of the second electrode assembly 60 may also be the same. Therefore, it is not necessary to form a plurality of first tabs 54 of different lengths in the positive electrode plate of the first electrode assembly 50. Therefore, the first electrode assembly 50 can be manufactured efficiently. This also applies to the second electrode assembly 60, the third electrode assembly 70, and the fourth electrode assembly 80.

More specifically, the first tab part 55 and the second tab part 65 are located in the Z-axis plus direction between the first body part 51 and the second body part 61, and the first current collector 500A. The first tab part 55 and the second tab part 65 are joined to the first current collector 500A in a posture bent toward one side in the Y-axis direction orthogonal to the Z-axis plus direction (in the Y-axis plus direction in Fig. 6).

With this configuration, the first tab part 55 and the second tab part 65 are in a bent state (see Fig. 6), allowing the first body part 51 and the second body part 61 to be brought closer to the first current collector 500A. Thus, the spatial volume between the first current collector 500A, and the first body part 51 and the second body part 61 can be reduced. This contributes to the improvement of the energy density of the energy storage device 10. Furthermore, as mentioned above, the surplus part of the first tab part 55 is unlikely to become long. Therefore, even if the first body part 51 and the second body part 61 are brought closer to the first current collector 500A, it is unlikely that any troubles will arise due to the surplus part coming into contact with the first body part 51 or the second body part 61.

In the present embodiment, the energy storage device 10 further includes the third electrode assembly 70 and the fourth electrode assembly 80. The third electrode assembly 70 includes the third tab part 75. The fourth electrode assembly 80 includes the fourth tab part 85. The third tab part 75 and the fourth tab part 85 are joined to the first current collector 500A at a second junction part 520. The length L3 of the third tab part 75 is shorter than the length L4 of the fourth tab part 85 (see Fig. 4). The first junction part 510 and the second junction part 520 face each other in the Y-axis direction (see Figs. 5 and 6).

With this configuration, as shown in Figs. 5 and 6, even when the first junction part 510 and the second junction part 520 are disposed to face each other in the Y-axis direction in the first current collector 500A, the surplus parts protruding from these junction parts are unlikely to come into contact with each other. This allows the joining work for the formation of the first junction part 510 and/or the formation of the second junction part 520 to be precisely executed. For example, even when the width of the first current collector 500A in the Y-axis direction is small, resulting in the first junction part 510 and the second junction part 520 being disposed at positions close to each other, the joining work for the formation of the first junction part 510 and/or the formation of the second junction part 520 can be executed precisely.

The energy storage device 10 according to the present embodiment includes the first current collector 500A and the second current collector 500B, which are one pair of (positive electrode and negative electrode) current collectors 500 as shown in Figs. 2, 3, 7, and 8. The first electrode assembly 50 further includes the fifth tab part 58 having a polarity different from the polarity of the first tab part 55. The second electrode assembly 60 further includes the sixth tab part 68 having a polarity different from the polarity of the second tab part 65. The fifth tab part 58 and the sixth tab part 68 are joined to the second current collector 500B at a third junction part 530. The length L5 of the fifth tab part 58 is shorter than the length L6 of the sixth tab part 68 (see Fig. 3).

With this configuration, the surplus part of the fifth tab part 58 (a part protruding in the Y-axis plus direction from the third junction part 530) is unlikely be generated at the third junction part 530 of the second current collector 500B. Thus, the occurrence of troubles caused by contact between the surplus part of the fifth tab part 58 and other members is suppressed. The first current collector 500A and the second current collector 500B are both disposed in the Z-axis plus direction of the first body part 51 and the second body part 61. Therefore, the joining work for joining the first current collector 500A and the second current collector 500B, and the first electrode assembly 50 and the second electrode assembly 60 can be efficiently performed.

In the present embodiment, as shown in Figs. 2, 3, 7, and 8, the third electrode assembly 70 and the fourth electrode assembly 80 also include one pair of (positive electrode and negative electrode) tab parts. The third electrode assembly 70 includes, in addition to the third tab part 75, the seventh tab part 78. The fourth electrode assembly 80 includes, in addition to the fourth tab part 85, the eighth tab part 88. The seventh tab part 78 and the eighth tab part 88 are joined to the second current collector 500B at a fourth junction part 540. The length L7 of the seventh tab part 78 is shorter than the length L8 of the eighth tab part 88 (see Fig. 3).

With this configuration, the surplus part of the seventh tab part 78 (a part protruding from the fourth junction part 540 in the Y-axis minus direction) at the fourth junction part 540 of the second current collector 500B is unlikely to become long. Therefore, the occurrence of troubles caused by contact between the surplus part of the seventh tab part 78 and other members is suppressed. In the second current collector 500B, even if the third junction part 530 and the fourth junction part 540 are disposed to face each other in the Y-axis direction, the surplus parts protruding from these junction parts are unlikely to come into contact with each other. This allows the joining work for the formation of the third junction part 530 and/or the formation of the fourth junction part 540 to be precisely executed.

In the present embodiment, as shown in Figs. 3 and 4, the first tab part 55 extends in the Z-axis plus direction from only a part of the first body part 51 in the electrode plate stacking direction (Y-axis direction). The second tab part 65 extends in the Z-axis plus direction from only a part of the second body part 61 in the electrode plate stacking direction (Y-axis direction). That is, the tab 54 is formed on not all of the flat portions stacked in the stacking direction, but the tab 54 is formed on only some flat portions of all the stacked flat portions, and the tab 54 of those some flat portions forms the first tab part 55. The same applies to the second tab part 65.

With this configuration, compared to a configuration in which tabs are formed on all of the flat portions in the stacking direction, the thickness of the first tab part 55 and the second tab part 65 can be reduced. Thus, when the first tab part 55 and the second tab part 65 are superimposed and joined to the first current collector 500A, the number of tabs to be superimposed can be reduced. As a result, the first tab part 55 and the second tab part 65 can be joined to the first current collector 500A precisely or easily. This contributes to the improvement in reliability of the first junction part 510.

More specifically, the first electrode assembly 50 is, as described above, a wound-type electrode assembly and has a flat shape in the Y-axis direction. The first electrode assembly 50 includes a winding central part 59 at a position where the winding axis W passes through. The flat portion of the positive electrode plate of the first body part 51 is divided into two parts in the Y-axis direction, with the winding central part 59 (winding axis W) as a boundary. Specifically, these are two parts: the part in the Y-axis plus direction from the winding central part 59; and the part in the Y-axis minus direction from the winding central part 59. In the present embodiment, the first tab 54 is formed only on the flat portion of the positive electrode plate in the Y-axis minus direction from the winding central part 59. Therefore, compared to a configuration in which the first tab 54 is formed on all flat portions of the positive electrode plate of the first body part 51, the thickness in the first tab part 55 (width in the Y-axis direction, which is the stacking direction of the current collecting foil (first tabs 54)) can be reduced. The same applies to the fifth tab part 58 provided in the first electrode assembly 50. The fifth tab part 58, which protrudes only from the portion of the first body part 51 in the Y-axis minus direction, has a relatively small thickness.

The above characteristics of the first tab part 55 and the fifth tab part 58 are also common to other tab parts. Specifically, as shown in Figs. 3 and 4, the second tab part 65 and the sixth tab part 68 protrude only from a part of the second body part 61 in the Y-axis minus direction relative to a winding central part 69 (winding axis W). The third tab part 75 and the seventh tab part 78 protrude only from a part of the third body part 71 in the Y-axis plus direction relative to the winding central part 79 (winding axis W). The fourth tab part 85 and the eighth tab part 88 protrude only from a part of the fourth body part 81 in the Y-axis plus direction relative to the winding central part 89 (winding axis W).

The energy storage device 10 according to the embodiment has been described above. However, the energy storage device 10 may have a configuration different from the configuration shown in Figs. 1 to 8, and the energy storage device 10 may be used as an energy storage device included in an energy storage apparatus. Therefore, modification examples of the energy storage device 10 will be described below, focusing on differences from the above embodiment.

### [3-1. Modification Example 1]

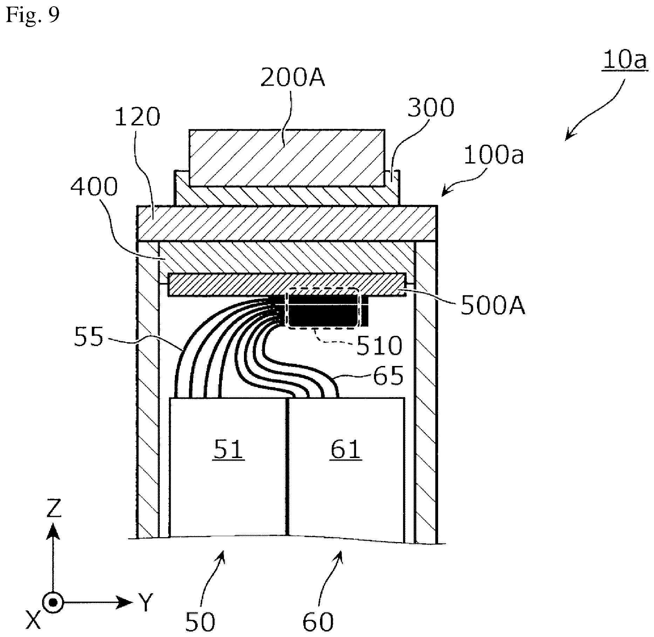

Fig. 9 is a cross-sectional view schematically showing a partial section of an energy storage device 10a according to a modification example 1 of the embodiment. The energy storage device 10a according to the present modification example shown in Fig. 9 differs from the energy storage device 10 according to the embodiment in including only two electrode assemblies.

Specifically, the energy storage device 10a according to the present modification example includes a first electrode assembly 50, a second electrode assembly 60, and a first current collector 500A. The first electrode assembly 50 and the second electrode assembly 60 are housed in a case 100a. The first current collector 500A is fixed to a lid body 120 of the case 100a along with a first terminal 200A. The first electrode assembly 50 includes a first tab part 55, and the second electrode assembly 60 includes a second tab part 65.

In the energy storage device 10a configured in this manner, similarly to the energy storage device 10 according to the embodiment, the first tab part 55 is shorter than the second tab part 65 (see Fig. 4), and at the first junction part 510, the first tab part 55 is disposed between the first current collector 500A and the second tab part 65. Therefore, in the energy storage device 10a according to the present modification example, the surplus part at the distal end of the first tab part 55 is unlikely to become long. As a result, the occurrence of troubles due to the surplus part is suppressed. Therefore, if the surplus part of the first tab part 55 is long, there is a possibility that the distal end of the surplus part may be close to the inner surface of the metal case 100a. However, in the energy storage device 10a according to the present modification example, the first tab part 55 is shorter than the second tab part 65, thereby suppressing the length of the surplus part of the first tab part 55. Therefore, the occurrence of troubles due to the contact of the surplus part with other members is suppressed.

### [3-2. Modification Example 2]

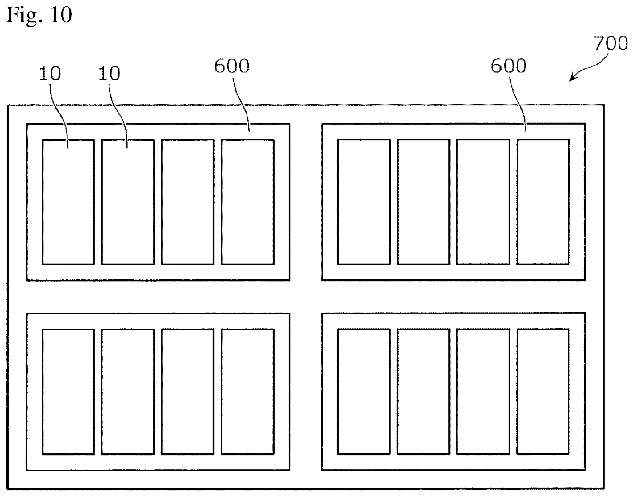

Fig. 10 is a plan view schematically showing the configuration of an energy storage apparatus 700 that includes the energy storage devices 10 according to the embodiment. As shown in Fig. 10, the energy storage devices 10 may be used in the energy storage apparatus 700. In this case, the technology of the present invention may be applied to at least one of the energy storage devices 10 included in the energy storage apparatus 700.

The energy storage apparatus 700 shown in Fig. 10 includes a plurality of energy storage units 600 arranged inside. Each of the energy storage units 600 includes the plurality of energy storage devices 10 that are electrically connected. The energy storage apparatus 700 may include a bus bar (not shown) that electrically connects the plurality of energy storage devices 10, and a bus bar (not shown) that electrically connects the plurality of energy storage units 600. The energy storage unit 600 or the energy storage apparatus 700 may include a state monitoring device (not shown) that monitors the state of one or more energy storage devices 10. The energy storage apparatus 700 may include only one energy storage unit 600. In this case, the energy storage unit 600 may be referred to as "energy storage apparatus".

In the present modification example, the energy storage apparatus 700 includes one or more of the energy storage devices 10 according to the above embodiment, but the energy storage apparatus 700 may also include the energy storage device 10a according to the modification example 1, in place of or in addition to one or more of the energy storage devices 10.

### [4. Other Modification Examples]

The energy storage device according to the embodiment of the present invention and the modification examples thereof have been described above; however, the present invention is not limited to the embodiment and the modification examples. That is, the embodiment disclosed this time should be considered as illustrative in all respects and not restrictive. The scope of the present invention is intended to include all changes within the meaning and scope of the claims and equivalents.

In the current collector 500, the number of tab parts joined by one junction part may be three or more. For example, at the first junction part 510 of the first current collector 500A shown in Fig. 5, a positive electrode tab part of another electrode assembly (third tab part) may be disposed in the Z-axis minus direction of the second tab part 65. In this case, it is preferable that the length relationship of the tab parts satisfies the first tab part 55 < the second tab part 65 < the third the tab part. This suppresses the length of the surplus part of the first tab part 55 and the second tab part 65 protruding from the first junction part 510.

The winding axis W of the first electrode assembly 50 is parallel to the Z axis direction (see Fig. 3), but this is not essential. The winding axis W of the first electrode assembly 50 may be parallel to the X-axis direction. That is, the first electrode assembly 50 may be housed in the case 100 in a posture where the winding axis W is orthogonally to the short side surface of the case 100 (side surface in the X-axis direction (see Fig. 1)). The first electrode assembly 50 of this configuration may include the first tab part 55 at one end of both ends of the first body part 51 in the X-axis direction, and may also include the fifth tab part 58 at the other end of both ends. That is, the positive electrode tab part may be formed at one end of the first body part in the winding axis W direction, and the negative electrode tab part may be formed at the other end of the first body part in the winding axis W direction. These also apply to the second electrode assembly 60, the third electrode assembly 70, and the fourth electrode assembly 80. For example, when the first tab part 55 is provided at the end of the first body part 51 in the X-axis plus direction, and the second tab part 65 is provided at the end of the second body part 61 in the X-axis plus direction, if the first tab part 55 is shorter than the second tab part 65, and the first tab part 55 is disposed between the first current collector 500A and the second tab part 65 at the first junction part 510, then the length of the surplus part of the first tab part 55 is suppressed. Similarly, when the fifth tab part 58 is provided at the end of the first body part 51 in the X-axis minus direction, and the sixth tab part 68 is provided in the X-axis minus direction of the second body part 61, if the fifth tab part 58 is shorter than the sixth tab part 68, and the fifth tab part 58 is disposed between the second current collector 500B and the sixth tab part 68 at the third junction part 530, then the length of the surplus part of the fifth tab part 58 is suppressed. With this configuration, the first current collector 500A and the second current collector 500B have a shape that extends from the lid body 120 along the inside of the case 100 to the short side surface of the case body 110.

The first tab part 55 may be disposed in the Y-axis plus direction from the winding central part 59 (winding axis W) in the first electrode assembly 50. In this case, the second tab part 65 may be disposed in the Y-axis minus direction from the winding central part 59 in the second electrode assembly 60, or may be disposed in the Y-axis plus direction. In any case, when the first tab part 55 is shorter than the second tab part 65, and when the first tab part 55 is disposed between the first current collector 500A and the second tab part 65 at the first junction part 510, the length of the surplus part protruding from the first junction part 510 is suppressed. Supplementary information regarding the first tab part 55 and the second tab part 65 may also apply to each of the third tab part 75 through the eighth tab part 88.

In the above embodiment, as shown in Figs. 3 and 4, the length L1 of the first tab part 55, the length L3 of the third tab part 75, the length L5 of the fifth tab part 58, and the length L7 of the seventh tab part 78 are substantially the same. However, the lengths of these four tab parts may be different from each other. The length L2 of the second tab part 65, the length L4 of the fourth tab part 85, the length L6 of the sixth tab part 68, and the length L8 of the eighth tab part 88 may be different from each other. Among these eight tab parts, the lengths of the two tab parts superimposed in the Z-axis direction at least at one junction part are required to be different from each other. That is, focusing on the four tab parts that are joined to the first current collector 500A, L1 < L2 is satisfied, and further preferably L3 < L4 is satisfied. Focusing on the four tab parts that are joined to the second current collector 500B, L5 < L6 is satisfied, and further preferably L7 < L8 is satisfied.

The current collector 500 is fixed to the case 100 by the shaft part 201 of the terminal 200 being crimped, and is electrically connected to the terminal 200, but this is not essential. For example, the current collector 500 may include a shaft part that protrudes in the Z-axis plus direction, and the shaft part may be crimped through the terminal 200, which does not include the shaft part 201. In this case as well, the current collector 500 is fixed to the case 100 and is electrically connected to the terminal 200. The method of joining the current collector 500 and the terminal 200 is not limited to crimping. The current collector 500 and the terminal may be joined by welding or by screw fastening (fastening by fitting a male screw and a female screw).

Supplementary information regarding the energy storage device 10 according to the above embodiment may also be applied to the energy storage device 10a according to the modification example 1. A form constructed by arbitrarily combining components included in the above embodiment and the modification examples is also included within the scope of the present invention.

### INDUSTRIAL APPLICABILITY

The present invention is applicable to energy storage devices such as lithium ion secondary batteries, and the like.

### DESCRIPTION OF REFERENCE SIGNS

10, 10a: Energy storage device
50: First electrode assembly
51: First body part
55: First tab part
58: Fifth tab part
60: Second electrode assembly
61: Second body part
65: Second tab part
68: Sixth tab part
70: Third electrode assembly
71: Third body part
75: Third tab part
80: Fourth electrode assembly
81: Fourth body part
85: Fourth tab part
500: Current collector
500A: First current collector
500B: Second current collector
510: First junction part
520: Second junction part
530: Third junction part
540: Fourth junction part

## Claims

1. An energy storage device comprising:
a first electrode assembly and a second electrode assembly; and
a first current collector, wherein
the first electrode assembly includes a first body part and a first tab part extending from an end of the first body part in a first direction,
the second electrode assembly includes a second body part and a second tab part extending from an end of the second body part in the first direction,
the first tab part and the second tab part are superimposed in the first direction and are joined to the first current collector at a first junction part,
the first tab part is located between the second tab part and the first current collector at the first junction part, and
a length of the first tab part is shorter than a length of the second tab part.

2. The energy storage device according to claim 1, wherein
the first tab part and the second tab part are located, in the first direction, between the first body part, the second body part and the first current collector, and are joined to the first current collector in a posture bent toward one side in a second direction orthogonal to the first direction.

3. The energy storage device according to claim 1 or 2, further comprising: a third electrode assembly and a fourth electrode assembly, wherein
the third electrode assembly includes a third body part and a third tab part extending from an end of the third body part in the first direction,
the fourth electrode assembly includes a fourth body part and a fourth tab part extending from an end of the fourth body part in the first direction,
the third tab part and the fourth tab part are superimposed in the first direction and are joined to the first current collector at a second junction part,
in the second junction part, the third tab part is located between the fourth tab part and the first current collector,
a length of the third tab part is shorter than a length of the fourth tab part, and
the first junction part and the second junction part face each other in the second direction orthogonal to the first direction.

4. The energy storage device according to claim 1 or 2, further comprising a second current collector, wherein
the first electrode assembly further includes a fifth tab part having a polarity different from a polarity of the first tab part, the fifth tab part extending from an end of the first body part in the first direction,
the second electrode assembly further includes a sixth tab part having a polarity different from a polarity of the second tab part, the sixth tab part extending from an end of the second body part in the first direction,
the fifth tab part and the sixth tab part are superimposed in the first direction and are joined to the second current collector at a third junction part,
the fifth tab part is located between the sixth tab part and the second current collector in the first direction, and
a length of the fifth tab part is shorter than a length of the sixth tab part.

5. The energy storage device according to claim 1 or 2, wherein
the first tab part extends in the first direction from only a part of the first body part in an electrode plate stacking direction, and
the second tab part extends in the first direction from only a part of the second body part in an electrode plate stacking direction.
